(19) Europäisches Patentamt

European Patent Office

Office européen des brevets

(11) **EP 4 125 177 B1**

(12) **EUROPEAN PATENT SPECIFICATION**

(45) Date of publication and mention of the grant of the patent:
**15.05.2024 Bulletin 2024/20**

(21) Application number: **22187815.0**

(22) Date of filing: **29.07.2022**

(51) International Patent Classification (IPC):
***H02J 7/00*** *(2006.01)*

(52) Cooperative Patent Classification (CPC):
**H02J 7/0063; H02J 7/0047; H02J 7/007182;**
H02J 2207/20; Y02E 60/10; Y02T 10/70

(54) **BATTERY MODULE AND CHARGING SYSTEM**

BATTERIEMODUL UND LADESYSTEM

MODULE DE BATTERIE ET SYSTÈME DE CHARGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2021 CN 202110875141**

(43) Date of publication of application:
**01.02.2023 Bulletin 2023/05**

(73) Proprietor: **Huawei Digital Power Technologies Co., Ltd.**
**Shenzhen, Guangdong 518043 (CN)**

(72) Inventors:
• **TUO, Hong**
**Shenzhen 518129 (CN)**

• **YU, Hua**
**Shenzhen 518129 (CN)**
• **LIN, Quanxi**
**Shenzhen 518129 (CN)**
• **ZHANG, Tianhui**
**Shenzhen 518129 (CN)**

(74) Representative: **Gill Jennings & Every LLP**
**The Broadgate Tower**
**20 Primrose Street**
**London EC2A 2ES (GB)**

(56) References cited:
**US-A1- 2016 064 962    US-A1- 2020 127 482**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Description

TECHNICAL FIELD

This application relates to the field of power supply technologies, and in particular, to a battery module and a charging system.

BACKGROUND

A battery module is widely used in various terminal devices. For example, the terminal device may include an electric vehicle, for example, a two-wheeled or three-wheeled electric vehicle. However, power and motor drive voltages of the two-wheeled and three-wheeled electric vehicles are different. For example, there are common voltage systems such as 36 V (V), 48 V, 60 V, and 72 V How to standardize, modularize, and generally configure a battery module becomes more important.

In current different voltage systems, the battery module is mainly implemented by using different quantities of serially-connected cells to form a cell pack, and the cell pack is connected to a terminal device through a charge/discharge switch. The charge/discharge switch is controlled based on an output status of the cell pack and an output status of a charger, to implement discharge and charge functions of the battery module.

For the foregoing technical solution, a charge voltage range and a discharge voltage range of the battery module are wide, and an input voltage range of a load is required to be very wide. Battery modules of different voltage systems cannot be normalized, and there are problems that a service life of the battery module is low and safety is poor. US-A-2020/127482 describes first electronic device, which is electronically coupled to a second device for supplying a charge to the second electronic device and tracks the voltage requirements of the second device and dynamically adjusts its output voltage upwards or downwards to match such requirements. The second electronic device may provide feedback to the first electronic device through a feedback loop. The feedback may include an indication of the voltage requirements and/or instructions for adjusting the voltage output of the first electronic device. The second device may be, for example, a wearable audio device, while the first device is a case for the wearable audio device.

SUMMARY

Embodiments of this application provide a battery module and a charging system, to improve a service life and safety of the battery module.

To resolve the foregoing technical problem, embodiments of this application provide the following technical solutions.

According to a first aspect, an embodiment of this application provides a battery module as defined in claim 1.

The detection and control unit is configured to: receive a terminal-required voltage sent by the terminal device; and control the buck-boost unit to discharge to the terminal device through the cell pack based on the terminal-required voltage.

In the foregoing solution, the battery module is configured to discharge to the terminal device. Specifically, the battery module includes: the detection and control unit, the buck-boost unit, and the cell pack. The detection and control unit is configured to: receive the terminal-required voltage sent by the terminal device, and control the buck-boost unit to discharge to the terminal device through the cell pack based on the terminal-required voltage. The battery module includes the detection and control unit. The detection and control unit may control the buck-boost unit to discharge to the terminal device through the cell pack based on the terminal-required voltage. Terminal devices with different voltage systems may use different terminal-required voltages. The detection and control unit may discharge to the terminal devices based on the terminal-required voltages, so that the battery module may discharge to various types of terminal devices. The battery module includes the detection and control unit. The terminal device always operates at an optimal input voltage point, so that the battery modules with different voltage systems are normalized and standardized, and service life and safety of the battery modules are improved.

In a possible implementation, the detection and control unit is configured to: obtain a second error reference value based on the terminal-required voltage and an output voltage of the buck-boost unit in a second period, where the second period is a voltage control period before the first period; obtain a second target output voltage based on the second error reference value and the output voltage of the buck-boost unit in the first period; and control the buck-boost unit to discharge to the terminal device based on the second target output voltage through the cell pack. In the foregoing solution, the detection and control unit obtains the terminal-required voltage. In addition, the detection and control unit obtains the output voltage of the buck-boost unit in the second period. A length of a working period of the buck-boost unit is not limited. It should be noted that in this embodiment of this application, voltage control is implemented based on a plurality of voltage periods, and a correspondence between the second period, the first period, and a third period is described by using an example. Specific implementations of different periods are not limited. The detection and control unit obtains the second error reference value based on the terminal-required voltage and the output voltage of the buck-boost unit in the second period. The second error reference value indicates a voltage value that needs to be compensated in the first period. Next, the second target output voltage is obtained based on the second error reference value and the output voltage of the buck-boost unit in the first period, where the second target output voltage indicates a target voltage value for controlling the buck-boost unit in the first period. Finally, the detection and control unit may control the buck-boost unit to discharge to the terminal device through the cell pack based on the second target output voltage. In this way, the battery module discharges to the terminal device with different voltage systems.

In a possible implementation, the detection and control unit is configured to obtain the second error reference value in the following manner:

$$Verror2 = Vinref - Voutref2.$$

Verror2 represents the second error reference value, Vinref represents the terminal-required voltage, and Uoutref2 represents the output voltage of the buck-boost unit in the second period. In the foregoing solution, the second error reference value indicates the voltage value that needs to be compensated in the first period, and Verror2 can be accurately calculated according to the foregoing calculation formula. The foregoing calculation formula is merely an example, and is not construed as a limitation in this embodiment of this application. For example, a variant of the foregoing calculation formula may be further used. For example, after a result is calculated on the right side of the equation, a preset voltage difference calibration value is subtracted from the result, to obtain the second error reference value.

In a possible implementation, the detection and control unit is configured to obtain the second target output voltage in the following manner:

$$Voutref3 = Voutref0 + Verror2.$$

Voutref3 represents the second target output voltage, Voutref0 represents the output voltage of the buck-boost unit in the first period, and Verror2 represents the second error reference value. In the foregoing solution, the second target output voltage indicates the target voltage value for controlling the buck-boosting unit in the first period, and Voutref3 can be accurately calculated according to the foregoing calculation formula. The foregoing calculation formula is merely an example, and is not construed as a limitation in this embodiment of this application. For example, a variant of the foregoing calculation formula may be further used. For example, after a result is calculated on the right side of the equation, a preset voltage calibration value is added to the result, to obtain the second target output voltage.

In a possible implementation, the detection and control unit is configured to: receive terminal information sent by the terminal device, where the terminal information indicates the terminal-required voltage; and obtain, based on the terminal information, the terminal-required voltage. In the foregoing solution, the terminal device may send the terminal information to the detection and control unit. The terminal information may also be referred to as a terminal signal. The terminal information indicates the terminal-required voltage. The detection and control unit may obtain the terminal-required voltage based on the terminal information. There are a plurality of manners for obtaining the terminal-required voltage. This is not limited herein. In this embodiment of this application, the battery module may obtain the terminal-required voltage through the terminal device, so that the battery module can discharge to the terminal device based on the terminal-required voltage.

In a possible implementation, the detection and control unit is configured to: when the terminal information includes the terminal-required voltage, obtain the terminal-required voltage from the terminal information; or when the terminal information includes voltage indication information, obtain the voltage indication information from the terminal information, and obtain the terminal-required voltage based on a preset correspondence between the voltage indication information and the terminal-required voltage. In the foregoing solution, the terminal information may carry the terminal-required voltage, and the detection and control unit may obtain the terminal-required voltage by parsing the terminal information. For another example, the terminal information does not carry the terminal-required voltage, but carries the voltage indication information. The detection and control unit obtains the terminal-required voltage based on the preset correspondence between the voltage indication information and the terminal-required voltage, where the correspondence between the voltage indication information and the terminal-required voltage may be prestored in the battery module.

In a possible implementation, the detection and control unit is configured to: when the first target output voltage meets a preset voltage compensation condition, receive a third error reference value sent by the terminal device, where the third error reference value is obtained by the terminal device based on the terminal-required voltage and a load input voltage of the terminal device in a third period, and the third period is a voltage control period after the first period; obtain a third target output voltage based on the third error reference value and an output voltage of the buck-boost unit in the third period; and control the buck-boost unit to discharge to the terminal device based on the third target output voltage through the cell pack. In the foregoing solution, when the first target output voltage meets the preset voltage compensation condition, the first target output voltage still needs to be compensated in the third period, so that the battery module can discharge based on the terminal-required voltage of the terminal device. A manner of calculating the third error reference value is similar to the manner of calculating the first error reference value, and a manner of calculating the third target output voltage is similar to the manner of calculating the first target output voltage. Details are not described herein again. For example, the buck-boost unit discharges based on the first target output voltage in the first period, and discharges based on the third target output voltage in the third period. After x periods elapse, added-up output voltage reference values of the buck-boost unit become Voutrefx. A voltage value of a terminal load port is close to or equal to the terminal-required voltage, so that the voltage of the terminal load port varies based on requirements of different vehicle loads and is not affected by a cell material, a remaining capacity of the cell, a quantity of serially-connected cells, an ambient temperature, and the like, where x is a positive integer greater than 0.

The detection and control unit is configured to: obtain a line impedance of the terminal device;

obtain a line voltage drop in the first period based on the line impedance and an output current of the buck-boost unit in the first period;
obtain a fourth target output voltage based on the line voltage drop in the first period and the terminal-required voltage; and
control the buck-boost unit to discharge to the terminal device based on the fourth target output voltage through the cell pack.

In the foregoing solution, the detection and control unit obtains the terminal-required voltage. In addition, the detection and control unit obtains the line impedance of the terminal device. The detection and control unit may further obtain the output current of the buck-boost unit in the first period, and the length of the working period of the buck-boost unit is not limited. It should be noted that in this embodiment of this application, voltage control is implemented based on a plurality of voltage periods, and a correspondence between the second period, the first period, and the third period is described by using an example. Specific implementations of different periods are not limited. The detection and control unit obtains the line voltage drop in the first period based on the line impedance and the output current of the buck-boost unit in the first period, where the line voltage drop in the first period indicates the voltage value that needs to be compensated in the first period. To discharge based on the terminal-required voltage, the detection and control unit further needs to: obtain the fourth target output voltage based on the line voltage drop in the first period and the terminal-required voltage, where the fourth target output voltage indicates the target voltage value used to control the buck-boost unit in the first period; and control the buck-boost unit to discharge to the terminal device based on the fourth target output voltage through the cell pack. In this way, the battery module discharges to the terminal device with different voltage systems.

In a possible implementation, the detection and control unit is configured to obtain the line voltage drop in the first period in the following manner:

$$Vdelta2 = R * It2.$$

Vdelta2 represents the line voltage drop in the first period, R represents the line impedance, It2 represents the output current of the buck-boost unit in the first period, and * represents a division operation.

In the foregoing solution, It2 represents the output current of the buck-boost unit in the first period. Therefore, the line voltage drop Vdelta2 in the first period may be calculated based on It2 and R, and the line voltage drop in the first period indicates the voltage value that needs to be compensated in the first period.

In a possible implementation, the detection and control unit is configured to obtain the fourth target output voltage in the following manner:

$$Voutref4 = Vinref + Vdelta2.$$

Voutref4 represents the fourth target output voltage, Vinref represents the terminal-required voltage, and Vdelta2 represents the line voltage drop in the first period.

In the foregoing solution, to discharge based on the terminal-required voltage, the detection and control unit further needs to obtain the fourth target output voltage based on the line voltage drop in the first period and the terminal-required voltage. For example, the fourth target output voltage may be obtained by adding the line voltage drop in the first period to the terminal-required voltage. The fourth target output voltage indicates the target voltage value for controlling the buck-boost unit in the first period. The foregoing calculation formula is merely an example, and is not construed as a limitation in this embodiment of this application. For example, a variant of the foregoing calculation formula may be further used. For example, after a result is calculated on the right side of the equation, a preset voltage calibration value is added to the result, to obtain the fourth target output voltage.

In a possible implementation, the detection and control unit is configured to: receive the load input voltage of the terminal device in the first period sent by the terminal device; obtain a line voltage drop in the second period based on the load input voltage of the terminal device in the first period and an output voltage of the buck-boost unit in the second period; and obtain the line impedance based on an output current of the buck-boost unit in the second period and a line voltage drop in the second period.

In a comparative example,
the detection and control unit is configured to obtain the line impedance of the terminal device based on a preset mapping relationship between the terminal device and the line impedance.

In the foregoing example, the detection and control unit may further obtain the line impedance according to the mapping relationship between the terminal device and the line impedance. For example, different types of terminal devices correspond to different line impedances. After obtaining an identifier of the terminal device, the line impedance of the terminal device may be obtained according to the mapping relationship. Alternatively, the detection and control unit may calculate the line impedance by itself. For example, the detection and control unit receives the load input voltage that is of the terminal device in the first period and that is sent by the terminal device, where the load input voltage in the first period is a load port voltage detected by the terminal device in the first period; obtains the line voltage drop in the second period based on the load input voltage of the terminal device in the first period and the output voltage of the buck-boost unit in the second period; and after obtaining the line voltage drop in the second period, obtains the line impedance based on the output current of the buck-boost unit in the second period and the line voltage drop in the second period. The detection and control unit may obtain the output current of the buck-boost unit in the second period from the buck-boost unit.

In a possible implementation, the detection and control unit is configured to obtain the line voltage drop in the second period in the following manner:

$$Vdelta1 = Voutref2 - Vin0.$$

Vdelta1 represents the line voltage drop in the second period, Voutref2 represents the output voltage of the buck-boost unit in the second period, and VinO represents the load input voltage of the terminal device in the first period.

In the foregoing solution, the line voltage drop indicates the voltage value that needs to be compensated in the first period, and Vdeltal can be accurately calculated according to the foregoing calculation formula. The foregoing calculation formula is merely an example, and is not construed as a limitation in this embodiment of this application. For example, a variant of the foregoing calculation formula may be further used. For example, after a result is calculated on the right side of the equation, a preset voltage difference calibration value is subtracted from the result, to obtain the line voltage drop.

In a possible implementation, the detection and control unit is configured to obtain the line impedance in the following manner:

$$R = Vdelta1 / It1.$$

R represents the line impedance, Vdeltal represents the line voltage drop in the second period, It1 represents the output current of the buck-boost unit in the second period, and / represents a division operation.

In the foregoing solution, It1 indicates the output current of the buck-boost unit in the second period. Therefore, the line impedance may be calculated based on It1 and Vdeltal, and the line impedance may be used to calculate a line voltage drop that needs to be compensated in the first period.

In a possible implementation, the detection and control unit is configured to: receive the load input voltage of the terminal device in the first period sent by the terminal device; obtain the first error reference value based on the terminal-required voltage and the load input voltage of the terminal device in the first period; obtain a fifth target output voltage based on the first error reference value and the terminal-required voltage; and control the buck-boost unit to discharge to the terminal device based on the fifth target output voltage through the cell pack.

In the foregoing solution, the detection and control unit discharges to the terminal device based on the terminal-required voltage. Because power output between the battery module and the terminal device necessarily has a loss, the terminal device detects the load input voltage of the terminal device in the first period. The load input voltage is an actual voltage received by the terminal device when the battery module outputs the terminal-required voltage. The terminal device may send the load input voltage of the terminal device in the first period to the battery module, and the detection and control unit receives the load input voltage of the terminal device in the first period sent by the terminal device. The load input voltage of the first period is a load port voltage detected by the terminal device in the first period. The detection and control unit obtains the first error reference value based on the terminal-required voltage and the load input voltage of the terminal device in the first period. For example, the load input voltage is subtracted from the terminal-required voltage to obtain the first error reference value. Then, the detection and control unit obtains the fifth target output voltage based on the first error reference value and the terminal-required voltage, where the fifth target output voltage is used to represent a target voltage value for controlling the buck-boost unit in the first period; and controls the buck-boost unit to discharge to the terminal device based on the fifth target output voltage through the cell pack. In this way, the battery module discharges to the terminal device with different voltage systems.

In a possible implementation, the detection and control unit is configured to obtain the fifth target output voltage in the following manner:

$$\text{Voutref5} = \text{Vinref} + \text{Verror1}.$$

Voutref5 represents the fifth target output voltage, Vinref represents the terminal-required voltage, and Verror1 represents the first error reference value.

In the foregoing solution, the fifth target output voltage indicates the target voltage value for controlling the buck-boost unit in the first period, and Voutref5 can be accurately calculated according to the foregoing calculation formula. The foregoing calculation formula is merely an example, and is not construed as a limitation in this embodiment of this application. For example, a variant of the foregoing calculation formula may be further used. For example, after a result is calculated on the right side of the equation, a preset voltage calibration value is added to the result, to obtain the fifth target output voltage.

In a possible implementation, the detection and control unit is configured to obtain a pulse width modulation PWM duty cycle based on the first target output voltage; and control the buck-boost unit, based on the PWM duty cycle, to discharge to the terminal device through the cell pack. In the foregoing solution, when the target voltage, of the buck-boost unit in the first period, obtained by the detection and control unit is the first target output voltage, the detection and control unit obtains the PWM duty cycle based on the first target output voltage; and control the buck-boost unit, based on the PWM duty cycle, to discharge to the terminal device through the cell pack. In this embodiment of this application, the battery module can accurately discharge to the terminal device in an automatic control manner.

In a possible implementation, the terminal-required voltage includes at least one of the following: a rated terminal voltage of the terminal device, a terminal operating voltage of the terminal device in the first period, or an input voltage corresponding to a current terminal operating mode of the terminal device. In the foregoing solution, the terminal-required voltage may be the rated terminal voltage of the terminal device. The rated terminal voltage varies with different terminal devices, and the terminal rated voltage may be preconfigured for the terminal device before delivery. For another example, the terminal-required voltage may be the operating voltage of the terminal device in the first period. For example, the terminal-required voltage is an operating voltage of the terminal device at a moment. For another example, the terminal-required voltage may be the input voltage corresponding to the terminal device in the current terminal operating mode, and different terminal operating modes correspond to different input voltages. For example, the terminal-required voltage is a comprehensive optimal input voltage value in an operating mode of a vehicle at a moment. For example, a terminal operating mode may be an optimal energy saving mode or an optimal power mode. An implementation of the terminal-required voltage is not limited in this embodiment of this application.

In a possible implementation, the buck-boost unit is separately connected to the detection and control unit and the cell pack.

The buck-boost unit is further configured to connect to the terminal device.

The detection and control unit is further configured to connect to the terminal device.

In a possible implementation, the buck-boost unit is configured to implement at least one of the following voltage control modes when discharging through the cell pack: boost output, buck output, time division buck-boost output, time division boost and shoot-through output, or time division buck-boost and shoot-through output.

According to a second aspect, an embodiment of this application further provides a battery module, where the battery module is charged through a direct current source, and battery module includes: a detection and control unit, a buck-boost unit, and a cell pack.

The detection and control unit is configured to: obtain a charge current limit and a charge voltage limit that are of the cell pack in a first period based on status information of the cell pack in the first period and output power of the direct current source; obtain target charge power of the cell pack in the first period based on the charge current limit and the charge voltage limit, a charge current and a charge voltage of the cell pack in the first period, and the output power of the direct current source; and control the buck-boost unit to charge the cell pack based on the target charge power through the direct current source.

In the foregoing solution, the battery module is charged through the direct current source, and the battery module includes: the detection and control unit, the buck-boost unit, and the cell pack, where the detection and control unit is configured to: obtain the charge current limit and the charge voltage limit that are of the cell pack in the first period based on status information of the cell pack in the first period and the output power of the direct current source; obtain the target charge power of the cell pack in the first period based on the charge current limit and the charge voltage limit, the charge current and the charge voltage of the cell pack in the first period, and the output power of the direct current source; and control the buck-boost unit to charge the cell pack based on the target charge power through the direct current source. The battery module includes the detection and control unit. The detection and control unit may obtain the charge current limit and the charge voltage limit that are of the cell pack in the first period, and obtain the target charge power that is of the cell pack in the first period. The cell pack is charged through the direct current source based on the target charge power. Therefore, the battery module can quickly and accurately adjust charge power, thereby eliminating dependence on functions such as voltage regulation and current limiting by a charger, achieving normalization and standardization of battery modules with different voltage systems, and improving service life and safety of the battery module.

In a possible implementation, the status information includes a cell temperature, or the status information includes the cell temperature and an electrochemical cell capacity. In the foregoing solution, the cell temperature is a temperature of the cell pack, and the electrochemical cell capacity is a capacity of the cell pack. A specific implementation of the cell temperature and the electrochemical cell capacity is not limited. For example, the detection and control unit in the battery module determines a current charge voltage limit value and a current charge current limit value of the cell pack through comprehensive calculation based on a specific rule by detecting a status of the cell pack, such as the cell temperature, or the cell temperature and the cell capacity, of the cell pack. Then, a real-time target charge power of the cell pack is comprehensively determined based on an external input capability (that is, a current output capability of the charger) of the battery module, and the buck-boost unit is controlled to provide the target charge power for the cell pack.

In a possible implementation, the detection and control unit is configured to: obtain charge power of the battery module based on the charge current limit, the charge voltage limit, and the charge current and the charge voltage of the cell pack in the first period; and obtain the target charge power based on the charge power of the battery module and the output power of the direct current source. In the foregoing solution, the detection and control unit controls, by controlling the buck-boost unit, the cell pack to be charged at the target charge power. The battery module does not rely on logic controls such as voltage scaling and/or current limiting of a charging input source. The detection and control unit may calculate the charge power of the battery module based on the charge current limit, the charge voltage limit, and the like, and choose a smaller one of the charge power of the battery module and the output power of the direct current source, that is, target charge power of a current electrochemical cell.

In a possible implementation, the detection and control unit is configured to: obtain a pulse width modulation PWM duty cycle based on the target charge power; and control the buck-boost unit, based on the PWM duty cycle, to charge the cell pack through the direct current source. In the foregoing solution, after obtaining the target charge power of the cell pack, the detection and control unit obtains the PWM duty cycle based on the target charge power, control the buck-boost unit, based on the PWM duty cycle, to charge the cell pack through the direct current source. In this embodiment of this application, the battery module can implement accurate charging in an automatic control manner.

In a possible implementation, the buck-boost unit is separately connected to the detection and control unit and the cell pack.

The buck-boost unit is further configured to connect to the direct current source.

In a possible implementation, the buck-boost unit is configured to implement at least one of the following voltage control modes when charging the cell pack: buck input, boost input, time division buck-boost input, time division boost and shoot-through input, time division buck-boost and shoot-through input, or time division buck-boost and shoot-through input.

According to a third aspect, an embodiment of this application further provides a charging system, where the charging system includes the battery module according to any one of the second aspect.

There are N battery modules, and N is a positive integer greater than or equal to 1.

In a possible implementation, when N is greater than 1, the N battery modules are connected to a direct current source after being connected in parallel.

In the foregoing solution, the battery module may be charged through any direct current source, and a plurality of battery modules in this embodiment of this application may share a same direct current source. In this embodiment of this application, when the battery module needs to be charged, the battery module does not depend on equalized charging or float charging control on a direct current source side, and an input source is replaced by a common direct current source, so that the battery module can implement standardization, normalization, and fast battery charging.

According to the third aspect of this application, the charging system includes the battery module. The battery module may be the battery module described in the second aspect and the possible implementations. For details, refer to the foregoing descriptions of the second aspect and the possible implementations.

As can be learned from the foregoing technical solutions, this embodiment of this application has the following advantages.

This embodiment of this application provides a battery module, where the battery module is configured to discharge to a terminal device. Specifically, the battery module includes: the detection and control unit, the buck-boost unit, and the cell pack. The detection and control unit is configured to: receive the terminal-required voltage sent by the terminal device, and control the buck-boost unit to discharge to the terminal device through the cell pack based on the terminal-required voltage. The battery module includes the detection and control unit. The detection and control unit may control the buck-boost unit to discharge to the terminal device through the cell pack based on the terminal-required voltage. Terminal devices with different voltage systems may use different terminal-required voltages. The detection and control unit may discharge to the terminal devices based on the terminal-required voltages, so that the battery module may discharge to various types of terminal devices. Alternatively, the detection and control unit is configured to: receive the first error reference value sent by the terminal device, obtain the first target output voltage based on the first error reference value, and control the buck-boost unit to discharge to the terminal device based on the first target output voltage through the cell pack. The battery module includes the detection and control unit. The detection and control unit may control the buck-boost unit to discharge to the terminal device through the cell pack based on the first target output voltage, and may send corresponding first error reference values to the terminal devices with different voltage systems. The detection and control unit may obtain the first target output voltage based on the first error reference value, and then discharge to the terminal device, so that the battery module may discharge to the various types of terminal devices. The terminal device always operates at an optimal input voltage point, so that the battery modules with different voltage systems are normalized and standardized, and service life and safety of the battery modules are improved.

This embodiment of this application provides a battery module, the battery module is charged through a direct current source, and the battery module includes: the detection and control unit, the buck-boost unit, and the cell pack, where the detection and control unit is configured to: obtain the charge current limit and the charge voltage limit that are of the cell pack in the first period based on status information of the cell pack in the first period and the output power of the direct current source; obtain the target charge power of the cell pack in the first period based on the charge current limit and the charge voltage limit, the charge current and the charge voltage of the cell pack in the first period, and the output power of the direct current source; and control the buck-boost unit to charge the cell pack based on the target charge power through the direct current source. The battery module includes the detection and control unit. The detection and control unit may obtain the charge current limit and the charge voltage limit that are of the cell pack in the first period, and obtain the target charge power that is of the cell pack in the first period. The cell pack is charged through the direct current source based on the target charge power. Therefore, the battery module can quickly and accurately adjust charge power, thereby eliminating dependence on functions such as voltage regulation and current limiting by a charger, achieving normalization and standardization of battery modules with different voltage systems, and improving service life and safety of the battery module.

## BRIEF DESCRIPTION OF DRAWINGS

FIG. 1 is a schematic diagram of a structure of composition of a battery module according to an embodiment of this application;

FIG. 2 is a schematic diagram of connection between a battery module and a terminal device according to an embodiment of this application;

FIG. 3 is a schematic diagram of connection between a battery module and a direct current source according to an embodiment of this application;

FIG. 4 is a schematic diagram of a structure of composition of a discharge system according to an embodiment of this application; and

FIG. 5 is a schematic diagram of connections between a plurality of battery modules and a direct current source according to an embodiment of this application.

## DESCRIPTION OF EMBODIMENTS

An embodiment of this application provides a battery module and a charging system, to improve a service life and safety of the battery module.

The following describes embodiments of this application with reference to the accompanying drawings.

Currently, battery modules with different voltage systems cannot be normalized, a charge voltage range and a discharge voltage range are wide, and an input voltage range of a terminal device is required to be very wide, and therefore the terminal device cannot always operate at an input voltage point. When a battery level decreases, a battery output voltage is equivalent to that a voltage of the battery is also decreased. As a result, power of the terminal device decreases significantly, affecting using of the terminal device. In addition, battery modules vary in capacity, newness, and manufacturer. Therefore, it is difficult to connect the battery modules in parallel for expansion and enhanced power. Battery modules of different capacities cannot be connected in parallel because shoot through is allowed between batteries and charge/discharge ports. Due to differences in materials and capacities of different battery modules, charge current limit and voltage regulation are not controlled in a timely manner when batteries are at high or low temperature and cells are overdischarged or float charged. For example, the terminal device may include an in-vehicle apparatus. It is not limited that the terminal device provided in this embodiment of this application is a device that needs to be powered by a battery module. A type of the terminal device and a specific implementation are not limited. For example, the terminal device may be a mobile phone, a wearable device, a personal computer, a server, or the like. An example in which the terminal device is specifically an in-vehicle apparatus is used for description. For a large vehicle power swap station, one charging box is configured with one dedicated charger. In this operating condition, usage efficiency of the charger cannot be well utilized, and costs are high in a centralized charging scenario.

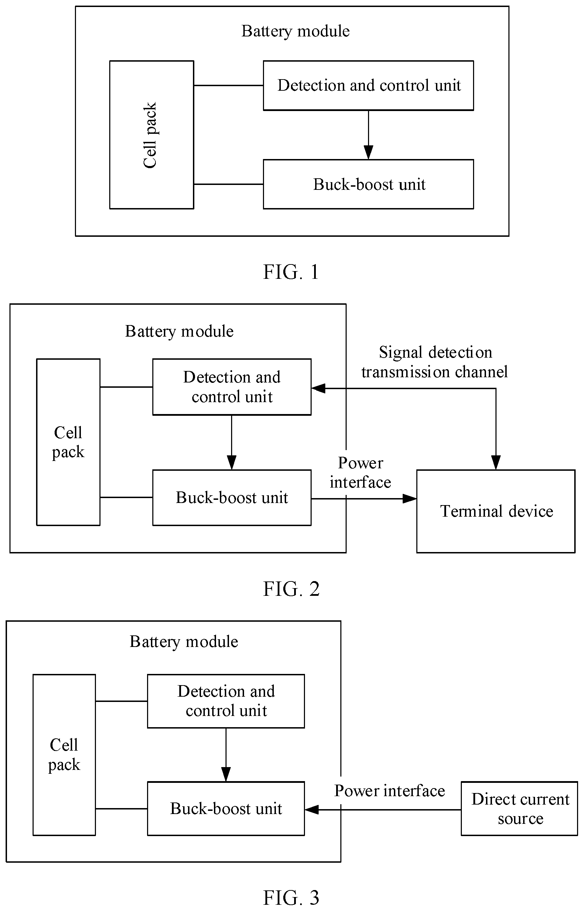

As shown in FIG. 1, an embodiment of this application provides a battery module. For example, the battery module may be a battery module in an electric vehicle. The battery module includes a detection and control unit, a buck-boost unit, and a cell pack. The detection and control unit is configured to control the buck-boost unit to charge or discharge, and the buck-boost unit is configured to perform buck-boost control on the cell pack. For example, the buck-boost unit may be a direct current/direct current converter (direct-current/direct-current converter, DC/DC). The DC/DC converter in this embodiment of this application may include but is not limited to an asymmetric half-bridge flyback converter, an asymmetric half-bridge forward converter, an LLC resonant converter, or the like. The DC/DC converter may also be referred to as a DC/DC conversion circuit. The cell pack may be a module formed by a plurality of cells. The cell is the smallest unit of a power battery and is also an electric energy storage unit. The cell has a relatively high energy density, to store as much electric energy as possible, so that the electric vehicle has a longer driving range. The cell pack charges and discharges under the control of the buck-boost unit.

The battery module provided in this embodiment of this application may be configured to discharge externally, or be charged through a direct current source. In this embodiment of this application, the buck-boost unit and the detection and control unit are integrated into the battery module. According to the detection and control solution provided in this embodiment of this application, the battery module may provide an input port voltage to a terminal device based on a requirement of the terminal device, to implement standardization and normalization, and flexible configuration of the battery module. This also resolves the problems of charging safety and a dedicated charger.

Next, discharging and charging scenarios to which the battery module is applicable are separately described in detail in this embodiment of this application.

In the discharging scenario, the battery module is configured to discharge to the terminal device, and the terminal device may be powered by the battery module to operate. An example in which the terminal device is specifically an in-vehicle apparatus is used for description. For example, the terminal device drives a vehicle to travel, or drives a terminal component such as an in-vehicle air conditioner or a vehicle lamp to operate. The terminal device may be specifically a vehicle motor drive apparatus or a vehicle signal processing unit.

As shown in FIG. 2, a battery module is configured to discharge to a terminal device, and the battery module includes a detection and control unit, a buck-boost unit, and a cell pack.

The detection and control unit is configured to: receive a terminal-required voltage sent by the terminal device; and control the buck-boost unit to discharge to the terminal device through the cell pack based on the terminal-required voltage.

Alternatively,

the detection and control unit is configured to: receive a first error reference value sent by the terminal device, where the first error reference value is obtained by the terminal device based on the terminal-required voltage and a load input voltage of the terminal device in a first period; obtain a first target output voltage based on the first error reference value and an output voltage of the buck-boost unit in the first period; and control the buck-boost unit to discharge to the terminal device based on the first target output voltage through the cell pack.

In some embodiments of this application, as shown in FIG. 2, the buck-boost unit is separately connected to the detection and control unit and the cell pack.

The buck-boost unit is further configured to connect to the terminal device.

The detection and control unit is further configured to connect to the terminal device.

The cell pack and the buck-boost unit are connected. The detection and control unit and the buck-boost unit are connected. The detection and control unit is connected to the terminal device through a signal detection transmission channel. The buck-boost unit includes a power interface, and the terminal device is connected to the power interface. The buck-boost unit discharges to the terminal device through the power interface.

Specifically, in an implementation scenario, the terminal device may send the terminal-required voltage to the battery module, where the terminal-required voltage is an operating voltage that needs to be used by the terminal device. For example, the detection and control unit is connected to the terminal device through the signal detection transmission channel. The terminal device sends the terminal-required voltage to the detection and control unit through the signal detection transmission channel, so that the detection and control unit obtains the terminal-required voltage of the terminal device.

In this embodiment of this application, after the detection and control unit receives the terminal-required voltage that is sent by the terminal device, the detection and control unit may control the buck-boost unit to discharge to the terminal device through the cell pack based on the terminal-required voltage. For example, the terminal-required voltage is a target value used to control the buck-boost unit. The buck-boost unit may control discharging of the cell pack based on the terminal-required voltage, so that discharge energy of the cell pack meets an input voltage requirement of the terminal device, so that the terminal device always operates at an optimal input voltage point. Normalization and standardization of battery modules of different voltage systems are achieved, and a service life and safety of the battery module are improved.

Specifically, in some embodiments of this application, the detection and control unit is configured to: obtain a second error reference value based on the terminal-required voltage and an output voltage of the buck-boost unit in a second period, where the second period is a voltage control period before the first period; obtain a second target output voltage based on the second error reference value and the output voltage of the buck-boost unit in the first period; and control the buck-boost unit to discharge to the terminal device based on the second target output voltage through the cell pack.

The detection and control unit obtains the terminal-required voltage. In addition, the detection and control unit obtains the output voltage of the buck-boost unit in the second period. A length of a working period of the buck-boost unit is not limited. For example, the first period and the second period are two adjacent voltage control periods. For example, the first period is a current period, and the second period is a previous period of the current period. It should be noted that in this embodiment of this application, voltage control is implemented based on a plurality of voltage periods. For example, the voltage control period includes the first period, the second period, and a third period. For example, the first period is the current period, and the second period is the previous period of the current period. The third period is a next period of the current period. In this embodiment of this application, correspondences among the second period, the first period, and the third period are described by using examples. Specific implementations of different periods are not limited.

The detection and control unit obtains the second error reference value based on the terminal-required voltage and the output voltage of the buck-boost unit in the second period. The second error reference value indicates a voltage value that needs to be compensated in the first period. Next, the second target output voltage is obtained based on the second error reference value and the output voltage of the buck-boost unit in the first period, where the second target output voltage indicates a target voltage value for controlling the buck-boost unit in the first period. Finally, the detection and control unit may control the buck-boost unit to discharge to the terminal device through the cell pack based on the second target output voltage. In this way, the battery module discharges to the terminal device with different voltage systems.

In some embodiments of this application, the detection and control unit is configured to obtain the second error reference value in the following manner:

$$Verror2 = Vinref - Voutref2.$$

Verror2 represents the second error reference value, Vinref represents the terminal-required voltage, and Voutref2 represents the output voltage of the buck-boost unit in the second period.

The second error reference value indicates the voltage value that needs to be compensated in the first period, and Verror2 can be accurately calculated according to the foregoing calculation formula. The foregoing calculation formula is merely an example, and is not construed as a limitation in this embodiment of this application. For example, a variant of the foregoing calculation formula may be further used. For example, after a result is calculated on the right side of the equation, a preset voltage difference calibration value is subtracted from the result, to obtain the second error reference value.

In some embodiments of this application, the detection and control unit is configured to obtain the second target output voltage in the following manner:

$$Voutref3 = Voutref0 + Verror2.$$

Voutref3 represents the second target output voltage, Voutref0 represents the output voltage of the buck-boost unit in the first period, and Verror2 represents the second error reference value.

The second target output voltage indicates the target voltage value for controlling the buck-boosting unit in the first period, and Voutref3 can be accurately calculated according to the foregoing calculation formula. The foregoing calculation formula is merely an example, and is not construed as a limitation in this embodiment of this application. For example, a variant of the foregoing calculation formula may be further used. For example, after a result is calculated on the right side of the equation, a preset voltage calibration value is added to the result, to obtain the second target output voltage.

In some embodiments of this application, the detection and control unit is configured to: receive terminal information sent by the terminal device, where the terminal information indicates the terminal-required voltage; and obtain, based on the terminal information, the terminal-required voltage.

Specifically, the terminal device may send the terminal information to the detection and control unit. The terminal information may also be referred to as a terminal signal. The terminal information indicates the terminal-required voltage. The detection and control unit may obtain the terminal-required voltage based on the terminal information. There are a plurality of manners for obtaining the terminal-required voltage. This is not limited herein. In this embodiment of this application, the battery module may obtain the terminal-required voltage through the terminal device, so that the battery module can discharge to the terminal device based on the terminal-required voltage.

In some embodiments of this application, the detection and control unit is configured to: when the terminal information includes the terminal-required voltage, obtain the terminal-required voltage from the terminal information; or when the terminal information includes voltage indication information, obtain the voltage indication information from the terminal information, and obtain the terminal-required voltage based on a preset correspondence between the voltage indication information and the terminal-required voltage.

Specifically, the terminal information may carry the terminal-required voltage, and the detection and control unit may obtain the terminal-required voltage by parsing the terminal information. For another example, the terminal information does not carry the terminal-required voltage, but carries the voltage indication information. The detection and control unit obtains the terminal-required voltage based on the preset correspondence between the voltage indication information and the terminal-required voltage, where the correspondence between the voltage indication information and the terminal-required voltage may be prestored in the battery module.

For example, the correspondence between the voltage indication information and the terminal-required voltage may be a preset rule. For example, the detection and control unit uses a communication protocol. If a vehicle sends a required voltage value of 48 V, the detection and control unit parses and obtains that the vehicle-required voltage is 48 V Alternatively, the voltage indication information is a fixed coding level output by the vehicle, and the detection and control unit can correspondingly parse and obtain the vehicle-required voltage, or the voltage indication information is a voltage simulation signal output by the vehicle. A simulation amount less than 0.5 V is considered as the vehicle-required voltage being 36 V, a simulation amount of 0.5 V to 1 V is considered as the vehicle-required voltage being 48 V, a simulation amount of 1 V to 1.5 V is considered as the vehicle-required voltage being 60 V, and the like. Alternatively, the voltage indication information may be a resistance value signal. A resistance value signal of 0 ohms to 100 ohms indicates that the vehicle-required voltage is 36 V, a resistance value signal of 200 ohms to 300 ohms indicates that the vehicle-required voltage is 48 V, and the like.

In some embodiments of this application, there are a plurality of implementations of the terminal-required voltage. For example, the terminal-required voltage includes at least one of the following: a rated terminal voltage of the terminal device, a terminal operating voltage of the terminal device in the first period, or an input voltage corresponding to a current terminal operating mode of the terminal device.

For example, the terminal-required voltage may be the rated terminal voltage of the terminal device. The rated terminal voltage varies with different terminal devices, and the terminal rated voltage may be preconfigured for the terminal device before delivery. For another example, the terminal-required voltage may be the terminal operating voltage of the terminal device in the first period. For example, the terminal-required voltage is an operating voltage of the terminal device at a moment. For another example, the terminal-required voltage may be the input voltage corresponding to the terminal device in the current terminal operating mode, and different terminal operating modes correspond to different input voltages. For example, the terminal-required voltage is a comprehensive optimal input voltage value in an operating mode of a vehicle at a moment. For example, a terminal operating mode may be an optimal energy saving mode or an optimal power mode. An implementation of the terminal-required voltage is not limited in this embodiment of this application.

In some embodiments of this application, the buck-boost unit is configured to implement at least one of the following voltage control modes when discharging through the cell pack: boost output, buck output, time division buck-boost output, time division boost and shoot-through output, time division buck and shoot-through output, or time division buck-boost and shoot-through output. Shoot-through means that the voltage of the cell pack is equal to a voltage of a battery module port. In other words, the voltage is not increased or the voltage is not decreased. The boost output means that the voltage of the cell pack needs to be increased and output. The buck output means that the voltage of the cell pack needs to be decreased and output. The time division means that the buck-boost unit operates in different voltage modes based on a preset time period. For example, the time division buck-boost output means that the buck-boost unit separately operates at the boost output or the buck output based on the preset time period. Meanings of the time division boost and shoot-through output, the time division buck and shoot-through output, or the time division buck-boost and shoot-through output are not described in detail.

In some embodiments of this application, after the detection and control unit receives the terminal-required voltage of the terminal device, the detection and control unit is configured to: obtain a line impedance of the terminal device; obtain a line voltage drop in the first period based on the line impedance and an output current of the buck-boost unit in the first period; obtain a fourth target output voltage based on the line voltage drop in the first period and the terminal-required voltage; and control the buck-boost unit to discharge to the terminal device based on the fourth target output voltage through the cell pack.

The detection and control unit obtains the terminal-required voltage. In addition, the detection and control unit obtains the line impedance of the terminal device. A specific manner of the line impedance is not limited. The detection and control unit may further obtain the output current of the buck-boost unit in the first period, and the length of the working period of the buck-boost unit is not limited.

The detection and control unit obtains the line voltage drop in the first period based on the line impedance and the output current of the buck-boost unit in the first period, where the line voltage drop in the first period indicates the voltage value that needs to be compensated in the first period. To discharge based on the terminal-required voltage, the detection and control unit further needs to: obtain the fourth target output voltage based on the line voltage drop in the first period and the terminal-required voltage, where the fourth target output voltage indicates the target voltage value used to control the buck-boost unit in the first period; and control the buck-boost unit to discharge to the terminal device based on the fourth target output voltage through the cell pack. In this way, the battery module discharges to the terminal device with different voltage systems.

In some embodiments of this application, the detection and control unit is configured to obtain the line voltage drop in the first period in the following manner:

$$Vdelta2 = R * It2.$$

Vdelta2 represents the line voltage drop in the first period, R represents the line impedance, It2 represents the output current of the buck-boost unit in the first period, and * represents a division operation.

Specifically, It2 represents the output current of the buck-boost unit in the first period. Therefore, the line voltage drop Vdelta2 in the first period may be calculated based on It2 and R, and the line voltage drop in the first period indicates the voltage value that needs to be compensated in the first period.

In some embodiments of this application, the detection and control unit is configured to obtain the fourth target output voltage in the following manner:

$$Voutref4 = Vinref + Vdelta2.$$

Voutref4 represents the fourth target output voltage, Vinref represents the terminal-required voltage, and Vdelta2 represents the line voltage drop in the first period.

To discharge based on the terminal-required voltage, the detection and control unit further needs to obtain the fourth target output voltage based on the line voltage drop in the first period and the terminal-required voltage. For example, the fourth target output voltage may be obtained by adding the line voltage drop in the first period to the terminal-required voltage. The fourth target output voltage indicates the target voltage value for controlling the buck-boost unit in the first period. The foregoing calculation formula is merely an example, and is not construed as a limitation in this embodiment of this application. For example, a variant of the foregoing calculation formula may be further used. For example, after a result is calculated on the right side of the equation, a preset voltage calibration value is added to the result, to obtain the fourth target output voltage.

In some embodiments of this application, the detection and control unit obtains the line impedance of the terminal device in a plurality of implementations. For example, the detection and control unit is configured to: receive the load input voltage of the terminal device in the first period sent by the terminal device; obtain a line voltage drop in the second period based on the load input voltage of the terminal device in the first period and an output voltage of the buck-boost unit in the second period; and obtain the line impedance based on an output current of the buck-boost unit in the second period and a line voltage drop in the second period.

In a comparative example, the detection and control unit is configured to obtain the line impedance of the terminal device based on a preset mapping relationship between the terminal device and the line impedance.

Specifically, in this comparative example, the detection and control unit may further obtain the line impedance according to the mapping relationship between the terminal device and the line impedance. For example, different types of terminal devices correspond to different line impedances. After obtaining an identifier of the terminal device, the line impedance of the terminal device may be obtained according to the mapping relationship. Alternatively, the detection and control unit may calculate the line impedance by itself. For example, the detection and control unit receives the load input voltage that is of the terminal device in the first period and that is sent by the terminal device, where the load input voltage in the first period is a load port voltage detected by the terminal device in the first period; obtains the line voltage drop in the second period based on the load input voltage of the terminal device in the first period and the output voltage of the buck-boost unit in the second period; and after obtaining the line voltage drop in the second period, obtains the line impedance based on the output current of the buck-boost unit in the second period and the line voltage drop in the second period. The output current of the buck-boost unit in the second period may be obtained from the buck-boost unit by the detection and control unit.

In some embodiments of this application, the detection and control unit is configured to obtain the line voltage drop in the second period in the following manner:

$$Vdelta1 = Voutref2 - Vin0.$$

Vdelta1 represents the line voltage drop in the second period, Voutref2 represents the output voltage of the buck-boost unit in the second period, and VinO represents the load input voltage of the terminal device in the first period.

The line voltage drop indicates the voltage value that needs to be compensated in the first period, and Vdeltal can be accurately calculated according to the foregoing calculation formula. The foregoing calculation formula is merely an example, and is not construed as a limitation in this embodiment of this application. For example, a variant of the foregoing calculation formula may be further used. For example, after a result is calculated on the right side of the equation, a preset voltage difference calibration value is subtracted from the result, to obtain the line voltage drop.

In some embodiments of this application, the detection and control unit is configured to obtain the line impedance in the following manner:

$$R = Vdelta1 / It1.$$

R represents the line impedance, Vdeltal represents the line voltage drop in the second period, It1 represents the output current of the buck-boost unit in the second period, and / represents a division operation.

Specifically, It1 indicates the output current of the buck-boost unit in the second period. Therefore, the line impedance may be calculated based on It1 and Vdeltal, and the line impedance may be used to calculate a line voltage drop that needs to be compensated in the first period.

In another implementation scenario, the terminal device may send the first error reference value to the battery module, where the first error reference value is obtained by the terminal device based on the terminal-required voltage and the load input voltage of the terminal device in the first period. For example, the detection and control unit is connected to the terminal device through the signal detection transmission channel, and the terminal device sends the first error reference value to the detection and control unit through the signal detection transmission channel, so that the detection and control unit obtains the first error reference value. Then, the detection and control unit obtains the first target output voltage based on the first error reference value and the output voltage of the buck-boost unit in the first period. The detection and control unit controls the buck-boost unit to discharge to the terminal device based on the first target output voltage by using the cell pack.

The terminal device first obtains the first error reference value, where the first error reference value indicates the voltage value that needs to be compensated for by the battery module in the first period, and the terminal device sends the first error reference value to the detection and control unit. The detection and control unit obtains the first error reference value. In addition, the detection and control unit obtains the output voltage of the buck-boost unit in the first period. A length of a working period of the buck-boost unit is not limited. It should be noted that in this embodiment of this application, voltage control is implemented based on a plurality of voltage periods. For example, the voltage control period includes the first period, the second period, and a third period. For example, the first period is the current period, and the second period is the previous period of the current period. The third period is a next period of the current period. In this embodiment of this application, correspondences among the second period, the first period, and the third period are described by using examples. Specific implementations of different periods are not limited.

The detection and control unit obtains the first target output voltage based on the first error reference value and the output voltage of the buck-boost unit in the first period; and control the buck-boost unit to discharge to the terminal device through the cell pack based on a first target output voltage, where the first target output voltage indicates a target voltage value for controlling the buck-boost unit in the first period. Finally, the detection and control unit may control the buck-boost unit to discharge to the terminal device through the cell pack based on the first target output voltage. In this way, the battery module discharges to the terminal device with different voltage systems.

In some embodiments of this application, the detection and control unit is configured to obtain the first target output voltage in the following manner:

$$Voutref1 = Voutref0 + Verror1.$$

Voutref1 represents the first target output voltage, Voutref0 represents the output voltage of the buck-boost unit in the first period, and Verror1 represents the first error reference value.

The first target output voltage indicates the target voltage value for controlling the buck-boosting unit in the first period, and Voutref1 can be accurately calculated according to the foregoing calculation formula. The foregoing calculation formula is merely an example, and is not construed as a limitation in this embodiment of this application. For example, a variant of the foregoing calculation formula may be further used. For example, after a result is calculated on the right side of the equation, a preset voltage calibration value is added to the result, to obtain the first target output voltage.

In some embodiments of this application, the detection and control unit may control the buck-boost unit to discharge to the terminal device through the cell pack based on the first target output voltage. In other words, the detection and control unit completes discharging to the terminal device in the first period. When the first target output voltage does not meet a preset voltage compensation condition, compensation does not need to be performed on the first target output voltage. When the first target output voltage meets the preset voltage compensation condition, the first target output voltage still needs to be compensated in the third period. There are a plurality of implementations of the voltage compensation condition. For example, the voltage compensation condition may be that when the first target output voltage is less than the terminal-required voltage, forward compensation is performed on the first target output voltage. For example, the voltage compensation condition may be that when the first target output voltage is greater than the terminal-required voltage, negative compensation is performed on the first target output voltage, so that the battery module can discharge based on the terminal-required voltage of the terminal device.

For example, the detection and control unit is configured to: when the first target output voltage meets the preset voltage compensation condition, receive a third error reference value sent by the terminal device, where the third error reference value is obtained by the terminal device based on the terminal-required voltage and a load input voltage of the terminal device in the third period, and the third period is the voltage control period after the first period; obtain a third target output voltage based on the third error reference value and an output voltage of the buck-boost unit in the third period; and control the buck-boost unit to discharge to the terminal device based on the third target output voltage through the cell pack.

It should be noted that, when the first target output voltage meets the preset voltage compensation condition, the first target output voltage still needs to be compensated in the third period, so that the battery module can discharge based on the terminal-required voltage of the terminal device. A manner of calculating the third error reference value is similar to the manner of calculating the first error reference value, and a manner of calculating the third target output voltage is similar to the manner of calculating the first target output voltage. Details are not described herein again.

For example, the buck-boost unit discharges based on the first target output voltage in the first period, and discharges based on the third target output voltage in the third period. After x periods elapse, added-up output voltage reference values of the buck-boost unit become Voutrefx. A voltage value of a terminal load port is close to or equal to the terminal-required voltage, so that the voltage of the terminal load port varies based on requirements of different vehicle loads and is not affected by a cell material, a remaining capacity of the cell, a quantity of serially-connected cells, an ambient temperature, and the like, where x is a positive integer greater than 0.

In some embodiments of this application, the detection and control unit is configured to: receive the load input voltage of the terminal device in the first period sent by the terminal device;

obtain the first error reference value based on the terminal-required voltage and the load input voltage of the terminal device in the first period;
obtain a fifth target output voltage based on the first error reference value and the terminal-required voltage; and control the buck-boost unit to discharge to the terminal device based on the fifth target output voltage through the cell pack.

Specifically, the detection and control unit discharges to the terminal device based on the terminal-required voltage. Because power output between the battery module and the terminal device necessarily has a loss, the terminal device detects the load input voltage of the terminal device in the first period. The load input voltage is an actual voltage received by the terminal device when the battery module outputs the terminal-required voltage. The terminal device may send the load input voltage of the terminal device in the first period to the battery module, and the detection and control unit receives the load input voltage of the terminal device in the first period sent by the terminal device. The load input voltage of the first period is a load port voltage detected by the terminal device in the first period. The detection and control unit obtains the first error reference value based on the terminal-required voltage and the load input voltage of the terminal device in the first period. For example, the load input voltage is subtracted from the terminal-required voltage to obtain the first error reference value. Then, the detection and control unit obtains the fifth target output voltage based on the first error reference value and the terminal-required voltage, where the fifth target output voltage is used to represent a target voltage value for controlling the buck-boost unit in the first period; and controls the buck-boost unit to discharge to the terminal device based on the fifth target output voltage through the cell pack. In this way, the battery module discharges to the terminal device with different voltage systems.

In some embodiments of this application, the detection and control unit is configured to obtain the fifth target output voltage in the following manner:

$$Voutref5 = Vinref + Verror1.$$

Voutref5 represents the fifth target output voltage, Vinref represents the terminal-required voltage, and Verror1 represents the first error reference value.

The fifth target output voltage indicates the target voltage value for controlling the buck-boost unit in the first period, and Voutref5 can be accurately calculated according to the foregoing calculation formula. The foregoing calculation formula is merely an example, and is not construed as a limitation in this embodiment of this application. For example, a variant of the foregoing calculation formula may be further used. For example, after a result is calculated on the right side of the equation, a preset voltage calibration value is added to the result, to obtain the fifth target output voltage.

In some embodiments of this application, the detection and control unit is configured to: obtain a pulse width modulation (pulse width modulation, PWM) duty cycle based on a first target output voltage; and control the buck-boost unit, based on the PWM duty cycle, to discharge to the terminal device through the cell pack.

When the target voltage, of the buck-boost unit in the first period, obtained by the detection and control unit is the first target output voltage, the detection and control unit obtains the PWM duty cycle based on the first target output voltage; and control the buck-boost unit, based on the PWM duty cycle, to discharge to the terminal device through the cell pack. In this embodiment of this application, the battery module can accurately discharge to the terminal device in an automatic control manner.

For example, the detection and control unit may use a manner of automatically controlling an output voltage value. Specifically, if the first target output voltage Voutref1 is 48 V, and a current actual output voltage is 45 V, a PWM1 is added on the basis of a PWM of a previous beat. The current PWM is PWM + PWM1. In a next period, the actual output voltage changes to 47 V and Voutref1 is still 48 V In this case, a PWM2 needs to be added. In other words, the current PWM is PWM + PWM1 + PWM2 until Voutref1 is equal to 48 V In this case, the PWM remains dynamically stable. The buck-boost unit is controlled, based on a latest PWM, to discharge to the terminal device through the cell pack is.

It can be learned from an example of the foregoing embodiments that the battery module is configured to discharge to the terminal device. Specifically, the battery module includes: the detection and control unit, the buck-boost unit, and the cell pack. The detection and control unit is configured to: receive the terminal-required voltage sent by the terminal device, and control the buck-boost unit to discharge to the terminal device through the cell pack based on the terminal-required voltage. The battery module includes the detection and control unit. The detection and control unit may control the buck-boost unit to discharge to the terminal device through the cell pack based on the terminal-required voltage. Terminal devices with different voltage systems may use different terminal-required voltages. The detection and control unit may discharge to the terminal devices based on the terminal-required voltages, so that the battery module may discharge to various types of terminal devices. Alternatively, the detection and control unit is configured to: receive the first error reference value sent by the terminal device, obtain the first target output voltage based on the first error reference value, and control the buck-boost unit to discharge to the terminal device based on the first target output voltage through the cell pack. The battery module includes the detection and control unit. The detection and control unit may control the buck-boost unit to discharge to the terminal device through the cell pack based on the first target output voltage, and may send corresponding first error reference values to the terminal devices with different voltage systems. The detection and control unit may obtain the first target output voltage based on the first error reference value, and then discharge to the terminal device, so that the battery module may discharge to the various types of terminal devices. The terminal device always operates at an optimal input voltage point, so that the battery modules with different voltage systems are normalized and standardized, and service life and safety of the battery modules are improved.

The foregoing embodiments describe a discharging process of the battery module. The following describes a charging process of the battery module. The battery module may be charged through any direct current source, and a plurality of battery modules in this embodiment of this application may share a same direct current source. In this embodiment of this application, when the battery module needs to be charged, the battery module does not depend on equalized charging or float charging control on a direct current source side, and an input source is replaced by a common direct current source, so that the battery module can implement standardization, normalization, and fast battery charging.

As shown in FIG. 3, a battery module is provided, where the battery module is charged through a direct current source, and battery module includes: a detection and control unit, a buck-boost unit, and a cell pack.

The detection and control unit is configured to: obtain a charge current limit and a charge voltage limit that are of the cell pack in a first period based on status information of the cell pack in the first period and output power of the direct current source; obtain target charge power of the cell pack in the first period based on the charge current limit and the charge voltage limit, a charge current and a charge voltage of the cell pack in the first period, and the output power of the direct current source; and control the buck-boost unit to charge the cell pack based on the target charge power through the direct current source.

The battery module includes the detection and control unit. The detection and control unit may first collect the status information of the cell pack in the first period, and then determine the charge current limit and the charge voltage limit that are of the cell pack in the first period based on the status information of the cell pack and the output power of the direct current source. The charge current limit and the charge voltage limit are determined by the status information of the cell pack and the output power of the direct current source. The charge current limit refers to a maximum current value that needs to be limited when the cell pack is charged, and an actual charge current cannot exceed the charge current limit. The charge voltage limit refers to a maximum voltage that needs to be limited when the battery is charged, and an actual charge voltage cannot exceed the charge voltage limit. For example, when the output power of the direct current source is sufficient, the charge current limit and the charge voltage limit that are of the cell pack in the first period are determined based on the status information of the cell pack.

The detection and control unit obtains the charge current limit and the charge voltage limit. In addition, the detection and control unit further needs to obtain the charge current and the charge voltage of the cell pack in the first period, and the output power of the direct current source. The charge current and the charge voltage of the cell pack in the first period refer to the actual charge current and the actual charge voltage in the first period, and the output power of the direct current source refers to a power parameter used by the direct current source to provide electric energy to the cell pack based on charge current limit and charge voltage limit. A target charge power of the cell pack in the first period may be obtained by combining the charge current and the charge voltage of the cell pack in the first period and the output power of the direct current source. The target charge power of the cell pack in the first period is a target charge power that can be used when the cell pack is charged in the first period. The target charge power is a target power value for controlling the buck-boost unit. Finally, the detection and control unit may control the buck-boost unit to charge, based on the target charge power, the cell pack through the direct current source. The battery module implements precise charging control and management based on a real-time status of a cell and does not rely on dedicated chargers for charging control, improving a battery life and safety.

In some embodiments of this application, the status information of the cell pack includes at least one of the following: a cell temperature.

Alternatively, the status information includes the cell temperature and a cell capacity.

The cell temperature is a temperature of the cell pack, and the electrochemical cell capacity is a capacity of the cell pack. A specific implementation of the cell temperature and the electrochemical cell capacity is not limited. For example, the detection and control unit in the battery module detects a status of the cell pack, such as a cell temperature, the cell temperature and a cell capacity, and the like. For example, the status information of the cell pack includes the cell temperature. The charge current limit corresponding to the cell temperature in the current period is obtained based on a preset correspondence between the cell temperature and the charge current limit. For example, when the cell temperature is in a first temperature range, the charge current limit is C1, and the charge voltage limit is V1. When the cell temperature is in a second temperature range, the charge current limit is C2, and the charge voltage limit is V2. In addition to the cell temperature, the status information may further include the cell capacity. To be specific, the charge current limit is determined based on the cell temperature and the cell capacity together. For a specific cell temperature and a cell capacity, the charge current limit and the charge voltage limit of a corresponding cell pack may be determined. After the status information of the cell pack is obtained, a current charge voltage limit value and a current charge current limit value of the cell pack are determined through comprehensive calculation based on a specific rule. Then, a real-time target charge power of the cell pack is comprehensively determined based on an external input capability (that is, a current output capability of the charger) of the battery module, and the buck-boost unit is controlled to provide the target charge power for the cell pack.

In some embodiments of this application, the detection and control unit is configured to: obtain charge power of the battery module based on the charge current limit, the charge voltage limit, and the charge current and the charge voltage of the cell pack in the first period; and obtain the target charge power based on the charge power of the battery module and the output power of the direct current source.

The detection and control unit controls, by controlling the buck-boost unit, the cell pack to be charged at the target charge power. The battery module does not rely on logic controls such as voltage scaling and/or current limiting of a charging input source. The detection and control unit may calculate the charge power of the battery module based on the charge current limit, the charge voltage limit, and the like, and choose a smaller one of the charge power of the battery module and the output power of the direct current source, that is, target charge power of a current electrochemical cell.

In some embodiments of this application, the detection and control unit is configured to: obtain a pulse width modulation PWM duty cycle based on the target charge power; and control the buck-boost unit, based on the PWM duty cycle, to charge the cell pack through the direct current source.

After obtaining the target charge power of the cell pack, the detection and control unit obtains the PWM duty cycle based on the target charge power, control the buck-boost unit, based on the PWM duty cycle, to charge the cell pack through the direct current source. In this embodiment of this application, the battery module can implement accurate charging in an automatic control manner.

In some embodiments of this application, the buck-boost unit is separately connected to the detection and control unit and the cell pack.

The buck-boost unit is further configured to connect to the direct current source.

The cell pack and the buck-boost unit are connected. The detection and control unit and the buck-boost unit are connected. The buck-boost unit includes a power interface, and a direct current source is connected to the power interface. The buck-boost unit discharges to the cell pack through the power interface.

In some embodiments of this application, the buck-boost unit is configured to implement at least one of the following voltage control modes when charging the cell pack: buck input, boost input, time division buck-boost input, time division boost and shoot-through input, time division buck and shoot-through input, or time division buck-boost and shoot-through input.

Shoot-through means that the voltage of the cell pack is equal to a voltage of a battery module port. In other words, the voltage is not increased or the voltage is not decreased. The boost input means that a voltage of the direct current source needs to be increased and input. The buck input means that the voltage of the direct current source needs to be decreased and input. The time division means that the buck-boost unit operates in different voltage modes based on a preset time period. For example, the time division buck-boos input means that the buck-boost unit operates in the boos input or the buck input based on the preset time period. Meanings of the time division boost and shoot-through input, the time division buck and shoot-through input, or the time division buck-boost and shoot-through input are not described in detail.

It can be learned from the example description in the foregoing embodiment that the battery module is charged through the direct current source, and the battery module includes: the detection and control unit, the buck-boost unit, and the cell pack, where the detection and control unit is configured to: obtain the charge current limit and the charge voltage limit that are of the cell pack in the first period based on the status information of the cell pack in the first period and the output power of the direct current source; obtain the target charge power of the cell pack in the first period based on the charge current limit and the charge voltage limit, the charge current and the charge voltage of the cell pack in the first period, and the output power of the direct current source; and control the buck-boost unit to charge the cell pack based on the target charge power through the direct current source. The battery module includes the detection and control unit. The detection and control unit may obtain the charge current limit and the charge voltage limit that are of the cell pack in the first period, and obtain the target charge power that is of the cell pack in the first period. The cell pack is charged through the direct current source based on the target charge power. Therefore, the battery module can quickly and accurately adjust charge power, thereby eliminating dependence on functions such as voltage regulation and current limiting by a charger, achieving normalization and standardization of battery modules with different voltage systems, and improving service life and safety of the battery module.

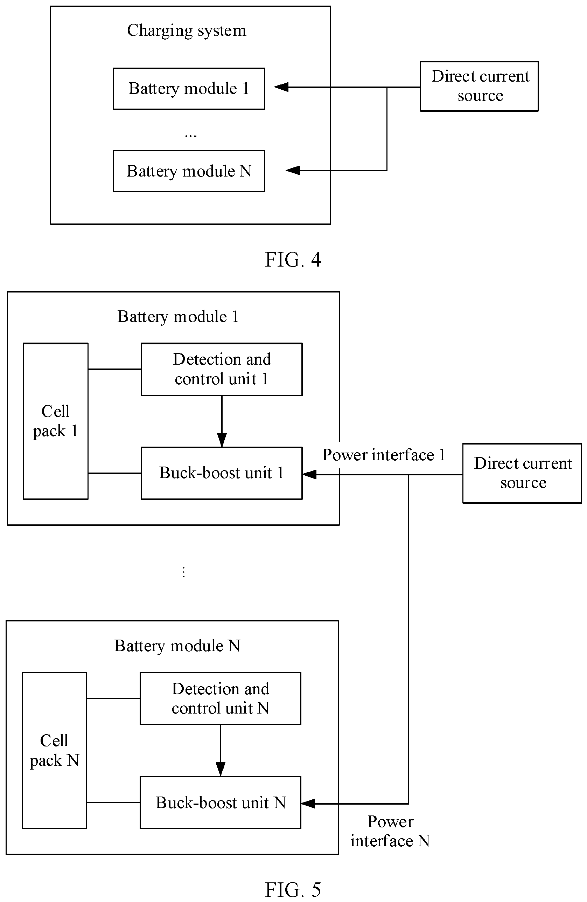

An embodiment of this application further provides a charging system. As shown in FIG. 4, the charging system includes the battery module shown in FIG. 3.

There are N battery modules, and N is a positive integer greater than or equal to 1.

In some embodiments of this application, when N is greater than 1, the N battery modules are connected to the direct current source after being connected in parallel.

The battery module may be charged through any direct current source, and a plurality of battery modules in this embodiment of this application may share a same direct current source. In this embodiment of this application, when the battery module needs to be charged, the battery module does not depend on equalized charging or float charging control on a direct current source side, and an input source is replaced by a common direct current source, so that the battery module can implement standardization, normalization, and fast battery charging.

It can be learned from the example description in the foregoing embodiments that the charging system may include one or more battery modules, the battery module is charged through a direct current source, and the battery module includes: the detection and control unit, the buck-boost unit, and the cell pack, where the detection and control unit is configured to: obtain the charge current limit and the charge voltage limit that are of the cell pack in the first period based on status information of the cell pack in the first period and the output power of the direct current source; obtain the target charge power of the cell pack in the first period based on the charge current limit and the charge voltage limit, the charge current and the charge voltage of the cell pack in the first period, and the output power of the direct current source; and control the buck-boost unit to charge the cell pack based on the target charge power through the direct current source. The battery module includes the detection and control unit. The detection and control unit may obtain the charge current limit and the charge voltage limit that are of the cell pack in the first period, and obtain the target charge power that is of the cell pack in the first period. The cell pack is charged through the direct current source based on the target charge power. Therefore, the battery module can quickly and accurately adjust charge power, thereby eliminating dependence on functions such as voltage regulation and current limiting by a charger, achieving normalization and standardization of battery modules with different voltage systems, and improving service life and safety of the battery module.

The following uses a detailed application scenario as an example for description. For example, the terminal device is specifically an in-vehicle apparatus, and the vehicle-required voltage is specifically a voltage required by the in-vehicle apparatus. Embodiments 1 to 3 shown below relate to a discharging scenario of a battery module, and Embodiment 4 relates to a charging scenario of a battery module.

In this embodiment of this application, a detection and control unit, a buck-boost unit, a detection circuit, a cell pack, and a communication circuit are integrated to form a battery module of an electric bike or an electric motorcycle. The detection and control unit detects a vehicle-required voltage based on a preset rule or communication negotiation. The buck-boost unit is controlled to output the vehicle-required voltage, to meet load voltage output requirements of different in-vehicle apparatuses, thereby implementing standardization and normalization of the battery module. When the battery module needs to be charged, the detection and control unit comprehensively calculates an optimal charge power based on a real-time cell temperature, a cell voltage, and a charge voltage of an input port of the battery module, and controls charge power of the battery module. Therefore, the battery module does not rely on voltage regulation and current limit control of a charger, thereby improving a service life of the battery and safety of the battery.

**Embodiment 1** of this application:

Battery modules of a two-wheeled electric bike and an electric motorcycle are used as an example. A vehicle-required voltage of the two-wheeled electric bike is generally lower than an output voltage of the battery module of the electric motorcycle. For example, a vehicle-required voltage of most two-wheeled electric bikes is rated 36 V or 48 V The output voltage of the battery module of the electric motorcycle is rated 60 V or 72 V The battery module identifies the vehicle-required voltage, and controls the battery module to output based on the vehicle-required voltage. The following steps are mainly included:

S11: A battery module is mounted on an electric vehicle, and the battery module outputs a lower safe voltage Voutref0 after being activated and woken up, to ensure that a signal processing unit of an in-vehicle apparatus operates.

S12: The signal processing unit of the in-vehicle apparatus operates, and transmit in-vehicle information to a detection and control unit in the battery module through a preset signal detection transmission channel. The in-vehicle information transmitted through the signal detection transmission channel may include but is not limited to an analog signal, an I/O logic level, controller area network (controller area network, CAN) communication, 458 communication, another serial-parallel communication manner, and the like. The in-vehicle information includes at least a preset vehicle-required voltage Vinref, and a voltage value of the vehicle-required voltage may be continuous (for example, an analog signal or a floating point number), a segment (that is, a voltage system represents a voltage range), a point (for example, 36 V, 48 V, or 60 V..), or the like.

S13: After receiving the in-vehicle information, the detection and control unit parses the in-vehicle information according to a preset rule. The preset rule refers to a communication protocol. For example, a value of the vehicle-required voltage sent by a vehicle is 48 V, and the battery module receives, parses, and obtains that the vehicle-required voltage is 48 V Alternatively, the vehicle outputs a fixed coding level, and the battery module can correspondingly parse and obtain the vehicle-required voltage. Alternatively, the vehicle outputs a voltage analog signal, where an analog quantity less than 0.5 V corresponds to a vehicle-required voltage of 36 V, an analog quantity of 0.5 V to 1 V corresponds to a vehicle-required voltage of 48 V, an analog quantity of 1 V to 1.5 V corresponds to a vehicle-required voltage of 60 V, or the like. Alternatively, the in-vehicle information may be a resistance value signal. A resistance value signal of 0 ohms to 100 ohms correspond to a vehicle-required voltage of 36 V, a resistance value signal of 200 ohms to 300 ohms correspond to a vehicle-required voltage of 48 V, or the like.

S14: The detection and control unit receives and parses the vehicle-required voltage Vinref according to the preset rule, calculates an error reference value Verror (for example, Verro r= Vinref - Voutref0), and adds the error reference value Verror to an output voltage reference value Voutref1.

S15: The detection and control unit uses Voutref1 = Voutref0 + Verror as a new voltage loop reference for controlling output of the buck-boost unit, and calculates, by using proportional integration (proportional integration, PI) in an automatic control principle, proportional integration differentiation (proportion integration differentiation, PID), or the like, a corresponding PWM duty cycle, to control the buck-boost unit to output based on Voutref1.

S16: After a plurality of times (for example, x times) in a running process of the foregoing steps S11 to S15, the added-up output voltage reference values of the buck-boost unit change to Voutrefx, and a value of an in-vehicle load port voltage is close to or equal to Vinref, so that the voltage of the in-vehicle load port varies with different vehicle load requirements. This is not affected by a cell material, a remaining capacity of the cell, a quantity of serially-connected cells, an ambient temperature, and the like. x is a positive integer greater than 0. A value of x is not limited in this embodiment of this application.

**Embodiment 2 of this application:**

A main difference between Embodiment 1 and Embodiment 2 lies in that a control unit of an in-vehicle apparatus detects its input port voltage Vin, and the control unit of the in-vehicle apparatus calculates an error value Verror based on the input port voltage Vin and a vehicle-required voltage in a current status. Then, the calculated error value is transferred to a detection and control unit of a battery module, and the detection and control unit in the battery module calculates a current voltage control reference value based on an adjustment value of a previous beat and a currently received Verror, where one beat is a preset voltage control period. For example, if a calculation period is 50 microseconds ($\mu s$), the calculation is repeated at an interval of 50 $\mu s$. Each calculation is a beat. In the embodiment 1, the detection and control unit in the battery module calculates an error value based on the Vinref input by a load, and does not obtain the in-vehicle load port voltage Vin.

Embodiment 2 mainly includes the following steps:

S21: The battery module outputs a control voltage VoutrefO, or outputs a preset default safe voltage VoutrefO, which are collectively referred to as Voutref0.

S22: After an in-vehicle load operates, the in-vehicle apparatus continuously and periodically detects a load input port voltage VinO, and compares it with a vehicle-required voltage Vinref of the in-vehicle apparatus, to obtain an error value Verror (for example, Verror = Vinref - VinO).

S23: The in-vehicle apparatus transfers the error value Verror to the detection and control unit in the battery module. For example, the error value is transferred through the detection and control unit and a signal detection transmission channel of the in-vehicle apparatus. For example, the error value sent by the in-vehicle apparatus may be an analog signal, or may be a CAN signal or another digital communication signal. This is not limited herein.

S24: The detection and control unit in the battery module adds the received error value Verror to a new output voltage reference Voutref1.

S25: The detection and control unit in the battery module obtains Voutref1 = Voutref0 + Verror, uses the Voutref1 = Voutref0 + Verror as a reference value of an output voltage loop controlled by a new buck-boost unit, calculates a PWM duty cycle based on a PI or a PID in an automatic control principle, and controls the buck-boost unit to discharge based on the added-up Voutref1 for output.

S26: After x times in a running process of the foregoing steps S22 to S25, the added-up output voltage reference values of the buck-boost unit change to Voutrefx, and a voltage value of the in-vehicle load port is close to or equal to Vinref, so that the in-vehicle load port voltage varies with different vehicle load requirements. This is not affected by a cell material, a remaining capacity, a quantity of serially-connected cells, an ambient temperature, and the like. x is a positive integer greater than 0. A value of x is not limited in this embodiment of this application.

**Embodiment 3 of this application:**

A main difference between Embodiment 1, Embodiment 2, and Embodiment 3 lies in that an instantaneous load current It is introduced. A line impedance R is calculated based on the instantaneous load current It and a line voltage drop V An output voltage is compensated in real time by using the line impedance, and Vdelat = It * R.

S31: A battery module outputs a control voltage Voutref0, or outputs a preset default safe voltage Voutref0, which are collectively referred to as Voutref0.

S32: After a vehicle operates, an in-vehicle apparatus continuously and periodically detects a load input port voltage VinO and a vehicle-required voltage Vinref, and transmits the voltages to a detection and control unit in the battery module.

S33: The detection and control unit in the battery module calculates a line voltage drop Vdelta (for example, Vdelta = Voutref0 - VinO) based on the output voltage of the battery module Voutref0 and the load input port voltage, and calculates the line impedance R = Vdelta/It1 based on an output current It1 in a previous period.

S34: The detection and control unit in the battery module calculates the line voltage drop Vdelta = R*It2 based on the line impedance calculated in step S33 and a real-time output load current It2.

S35: The detection and control unit in the battery module obtains, based on the vehicle-required voltage Vinref and the line voltage drop Vdelta calculated in step S34, an output voltage target value being Voutrefx = Vinref + Vdelta.

S36: After the quick compensation, the in-vehicle load port voltage varies with different vehicle load requirements, and is not affected by a load current change in addition to a cell material, a remaining capacity, a quantity of serially-connected cells, an ambient temperature, and the like. The in-vehicle load port voltage is stabilized quickly.

**Embodiment 4 of this application:**

As shown in FIG. 5, for example, a charging system includes N battery modules. The N battery modules of different capacities and statuses are connected in parallel and charged by using one or more direct current sources in parallel, where N is an integer greater than or equal to 1. A detection and control unit in each battery module comprehensively calculates a charge current limit value and a charge voltage limit value of the battery module based on a cell temperature, or the cell temperature and a cell capacity, and the like, and calculates an output PWM duty cycle by using such as an automatic control principle PI, a PID algorithm, or the like. A buck-boost unit in the battery module is controlled to perform precise charging management on the cell, so that charging of the battery module does not depend on equalized and float charging control of the charger. A common direct current source in place of a dedicated charger is used as an input source. This can implement standardization, normalization, and fast battery charging of the battery module. The following steps are mainly included.

S41: When the battery module needs to be charged, a power interface of the battery module is connected to a direct current source output port. In this embodiment of this application, a common direct current source may be used to replace a dedicated charger, and no dedicated charger or one-to-one charging is required.

S42: The detection and control unit in the battery module detects the cell temperature of the battery module, and calculates a real-time cell charge voltage limit Vchgref of the battery module and a real-time charge current limit Ichgref of the battery module based on the cell temperature and an output power of the direct current source. Alternatively, the detection and control unit detects the cell temperature and the cell capacity of the battery module, and calculates the real-time cell charge voltage limit Vchgref of the battery module and the real-time charge current limit Ichgref of the battery module based on the cell temperature, the cell capacity, and the output power of the direct current source. For example, if the cell temperature is less than 0 degrees, a charge current is zero, and charging needs to be stopped. If the cell temperature is 0 degrees to 5 degrees, the charge current is not greater than 0.2 C. If the cell temperature is 5 degrees to 15 degrees, the charge current is 0.5 C. If the cell temperature is greater than 15 degrees, the charge current is 1 C. Range division of the cell temperature and the charge current vary with different cell materials.

S43: The detection and control unit in the battery module uses a real-time charge current It and a battery real-time charge voltage Vbat as a feedback value, and the calculated maximum charge current limit value Ichgref and the cell pack charge voltage limit value Vchgref as a reference value, to calculate the output PWM duty cycle according to the automatic control principle PI, the PID algorithm, or the like.

S44: Control the buck-boost unit to implement maximum voltage limit and current limit charging control of the cell based on the calculated PWM duty cycle, without depending on control of a dedicated charger.

It can be learned from the foregoing examples that, the buck-boost unit and the detection and control unit are integrated into the battery module of the electric vehicle, so that normalization of vehicle batteries at different voltage levels can allow a battery output voltage to adaptively adapt to a vehicle load requirement. A load discharge voltage of the battery module is not affected by the quantity of batteries, the battery capacity, the ambient temperature, and a load current, and acceleration performance is not limited. When the battery module discharges the vehicle, it detects the load current and a real-time requirement of the vehicle load on the voltage, so that the voltage at an input port of the vehicle electric drive always operates in an optimal status.

The charging system provided in this embodiment of this application may implement parallel expansion and enhanced power of battery modules of different capacities and different statuses. The battery module performs precise charging control and management based on a real-time status of a cell and does not depend on dedicated chargers for charging control, improving a service life and safety of a battery. A common direct current power source can be used to replace a dedicated charger, reducing centralized charging costs and improving charging efficiency.

It should be noted that the terms "first" and "second" in the specification, the claims, and the accompanying drawings of this application are merely used for description purposes, and are not construed as indicating or implying relative importance. The terms "first" and "second" are used to distinguish between similar objects, and do not need to be used to describe a specific order or sequence. It should be understood that the terms used in such a way are interchangeable in proper circumstances, and this is merely a distinguishing manner used when objects having a same attribute are described in embodiments of this application. In addition, terms "include", "have", and any other variants thereof mean to cover the non-exclusive inclusion, so that a process, method, system, product, or device that includes a series of units is not necessarily limited to those units, but may include other units not expressly listed or inherent to such a process, method, product, or device.

In this application, "at least one" means one or more, and "plurality" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally represents an "or" relationship between associated objects. "At least one of the following items (pieces)" or a similar expression thereof indicates any combination of these items, including a single item (piece) or any combination of a plurality of items (pieces). For example, at least one (piece) of a, b, or c may represent: a, b, c, "a and b", "a and c", "b and c", or "a, b, and c", where a, b, and c may be singular or plural.

All functional units in the embodiments of this application may be integrated into one processing unit, each unit may be separately used as one unit, or two or more units may be integrated into one unit. The integrated units may be implemented in a form of hardware, or may be implemented in a form of a hardware and software functional unit.

## Claims

1. A battery module, wherein the battery module is configured to discharge to a terminal device, and the battery module comprises a detection and control unit, a buck-boost unit, and a cell pack;
   the detection and control unit is configured to:

   receive a terminal-required voltage sent by the terminal device; and control the buck-boost unit to discharge to the terminal device through the cell pack based on the terminal-required voltage;
   **characterized in that** the control unit is further configured to:

   receive a load input voltage that is of the terminal device in a first period and that is sent by the terminal device, where the load input voltage in the first period is a load port voltage detected by the terminal device in the first period; obtain a line voltage drop in the second period based on the load input voltage of the terminal device in the first period and the output voltage of the buck-boost unit in the second period; and after obtaining the line voltage drop in the second period, obtain a line impedance based on the output current of the buck-boost unit in the second period and the line voltage drop in the second period;
   obtain a line voltage drop in the first period based on the line impedance and an output current of the buck-boost unit in the first period;
   obtain a fourth target output voltage based on the line voltage drop in the first period and the terminal-required voltage; and
   control the buck-boost unit to discharge to the terminal device based on the fourth target output voltage through the cell pack.

2. The battery module according to claim 1, wherein the detection and control unit is configured to: obtain a second error reference value based on the terminal-required voltage and an output voltage of the buck-boost unit in a second period, wherein the second period is a voltage control period before the first period; obtain a second target output voltage based on the second error reference value and the output voltage of the buck-boost unit in the first period; and control the buck-boost unit to discharge to the terminal device based on the second target output voltage through the cell pack.

3. The battery module according to claim 2, wherein the detection and control unit is configured to obtain the second error reference value in the following manner:

$$Verror2 = Vinref - Voutref2,$$

   wherein
   Verror2 represents the second error reference value, Vinref represents the terminal-required voltage, and Voutref2 represents the output voltage of the buck-boost unit in the second period.

4. The battery module according to claim 2 or 3, wherein the detection and control unit is configured to obtain the second target output voltage in the following manner:

$$Voutref3 = Voutref0 + Verror2,$$

wherein
Voutref3 represents the second target output voltage, Voutref0 represents the output voltage of the buck-boost unit in the first period, and Verror2 represents the second error reference value.

5. The battery module according any one of claims 1 to 4, wherein the detection and control unit is configured to: receive terminal information sent by the terminal device, wherein the terminal information indicates the terminal-required voltage; and obtain, based on the terminal information, the terminal-required voltage.

6. The battery module according to claim 5, wherein the detection and control unit is configured to: when the terminal information comprises the terminal-required voltage, obtain the terminal-required voltage from the terminal information; or when the terminal information comprises voltage indication information, obtain the voltage indication information from the terminal information, and obtain the terminal-required voltage based on a preset correspondence between the voltage indication information and the terminal-required voltage.

7. The battery module according to claim 1, wherein the detection and control unit is configured to: when the first target output voltage meets a preset voltage compensation condition, receive a third error reference value sent by the terminal device, wherein the third error reference value is obtained by the terminal device based on the terminal-required voltage and a load input voltage of the terminal device in a third period, and the third period is a voltage control period after the first period; obtain a third target output voltage based on the third error reference value and an output voltage of the buck-boost unit in the third period; and control the buck-boost unit to discharge to the terminal device based on the third target output voltage through the cell pack.

8. The battery module according to claim 1, wherein the detection and control unit is configured to obtain the line voltage drop in the first period in the following manner:

$$Vdelta2 = R * It2,$$

wherein
Vdelta2 represents the line voltage drop in the first period, R represents the line impedance, It2 represents the output current of the buck-boost unit in the first period, and * represents a division operation.

9. The battery module according to either of claims 1 and 8, wherein the detection and control unit is configured to obtain the fourth target output voltage in the following manner:

$$Voutref4 = Vinref + Vdelta2,$$

wherein
Voutref4 represents the fourth target output voltage, Vinref represents the terminal-required voltage, and Vdelta2 represents the line voltage drop in the first period.

**Patentansprüche**

1. Batteriemodul, wobei das Batteriemodul dazu konfiguriert ist, an ein Endgerät zu entladen, und das Batteriemodul eine Erkennungs- und Steuereinheit, eine Buck-Boost-Einheit und ein Zellenpaket umfasst;
wobei die Erkennungs- und Steuereinheit zu Folgendem konfiguriert ist:

Empfangen einer von dem Endgerät benötigten Spannung, die vom Endgerät gesendet wird; und Steuern der Buck-Boost-Einheit so, dass sie an das Endgerät über das Zellenpaket basierend auf der von dem Endgerät benötigten Spannung entlädt;
**dadurch gekennzeichnet, dass** die Steuereinheit ferner zu Folgendem konfiguriert ist:

Empfangen einer Lasteingangsspannung, die von dem Endgerät in einem ersten Zeitraum stammt und von dem Endgerät gesendet wird, wobei die Lasteingangsspannung in dem ersten Zeitraum eine Lastanschlussspannung ist, die von dem Endgerät in dem ersten Zeitraum erfasst wurde; Erlangen eines Netzspannungsabfalls in dem zweiten Zeitraum basierend auf der Lasteingangsspannung des Endgeräts in dem ersten Zeitraum und der Ausgangsspannung der Buck-Boost-Einheit in dem zweiten Zeitraum; und nach Erlangen des Netzspannungsabfalls in dem zweiten Zeitraum Erlangen einer Leitungsimpedanz basierend auf dem Ausgangsstrom der Buck-Boost-Einheit in dem zweiten Zeitraum und dem Netzspannungsabfall in dem zweiten Zeitraum; Erlangen eines Netzspannungsabfalls in dem ersten Zeitraum basierend auf der Leitungsimpedanz und einem Ausgangsstrom der Buck-Boost-Einheit in dem ersten Zeitraum; Erlangen einer vierten Zielausgangsspannung basierend auf dem Netzspannungsabfall in dem ersten Zeitraum und der von dem Endgerät benötigten Spannung; und Steuern der Buck-Boost-Einheit so, dass sie an das Endgerät basierend auf der vierten Zielausgangsspannung durch das Zellenpaket entlädt.

2. Batteriemodul nach Anspruch 1, wobei die Erkennungs- und Steuereinheit zu Folgendem konfiguriert ist: Erlangen eines zweiten Fehlerreferenzwerts basierend auf der von dem Endgerät benötigten Spannung und einer Ausgangsspannung der Buck-Boost-Einheit in einem zweiten Zeitraum, wobei der zweite Zeitraum ein Spannungssteuerzeitraum vor dem ersten Zeitraum ist; Erlangen einer zweiten Zielausgangsspannung basierend auf dem zweiten Fehlerreferenzwert und der Ausgangsspannung der Buck-Boost-Einheit in dem ersten Zeitraum und Steuern der Buck-Boost-Einheit so, dass sie an das Endgerät basierend auf der zweiten Zielausgangsspannung durch das Zellenpaket entlädt.

3. Batteriemodul nach Anspruch 2, wobei die Erkennungs- und Steuereinheit dazu konfiguriert ist, den zweiten Fehlerreferenzwert auf folgende Weise zu erlangen:

$$Verror2 = Vinref - Voutref2,$$

wobei
Verror2 den zweiten Fehlerreferenzwert darstellt, Vinref die von dem Endgerät benötigte Spannung darstellt und Voutref2 die Ausgangsspannung der Buck-Boost-Einheit in dem zweiten Zeitraum darstellt.

4. Batteriemodul nach Anspruch 2 oder 3, wobei die Erkennungs- und Steuereinheit dazu konfiguriert ist, die zweite Zielausgangsspannung auf folgende Weise zu erlangen:

$$Voutref3 = Voutref0 + Verror2,$$

wobei
Voutref3 die zweite Zielausgangsspannung darstellt, Voutref0 die Ausgangsspannung der Buck-Boost-Einheit in dem ersten Zeitraum darstellt und Verror2 den zweiten Fehlerreferenzwert darstellt.

5. Batteriemodul nach einem der Ansprüche 1 bis 4, wobei die Erkennungs- und Steuereinheit zu Folgendem konfiguriert ist:
Empfangen von Endgerät-Informationen, die von dem Endgerät gesendet werden, wobei die Endgerät-Informationen die von dem Endgerät benötigte Spannung angeben; und Erlangen, basierend auf den Endgerät-Informationen, der von dem Endgerät benötigten Spannung.

6. Batteriemodul nach Anspruch 5, wobei die Erkennungs- und Steuereinheit zu Folgendem konfiguriert ist: wenn die Endgerät-Informationen die von dem Endgerät benötigte Spannung umfassen, Erlangen der von dem Endgerät benötigten Spannung aus den Endgerät-Informationen; oder, wenn die Endgerät-Informationen Spannungsanzeigeinformationen umfassen, Erlangen der Spannungsanzeigeinformationen aus den Endgerät-Informationen und Erlangen der von dem Endgerät benötigten Spannung basierend auf einer voreingestellten Entsprechung zwischen den Spannungsanzeigeinformationen und der von dem Endgerät benötigten Spannung.

7. Batteriemodul nach Anspruch 1, wobei die Erkennungs- und Steuereinheit zu Folgendem konfiguriert ist: wenn die erste Zielausgangsspannung eine voreingestellte Spannungskompensationsbedingung erfüllt, Empfangen eines dritten Fehlerreferenzwerts, der von dem Endgerät gesendet wird, wobei der dritte Fehlerreferenzwert von dem Endgerät basierend auf der von dem Endgerät benötigten Spannung und einer Lasteingangsspannung des Endgeräts in einem dritten Zeitraum erlangt wird und der dritte Zeitraum ein Spannungssteuerzeitraum nach dem ersten Zeitraum ist; Erlangen einer dritten Zielausgangsspannung basierend auf dem dritten Fehlerreferenzwert und einer Ausgangsspannung der Buck-Boost-Einheit in dem dritten Zeitraum; und Steuern der Buck-Boost-Einheit so, dass sie an das Endgerät basierend auf der dritten Zielausgangsspannung durch das Zellenpaket entlädt.

**8.** Batteriemodul nach Anspruch 1, wobei die Erkennungs- und Steuereinheit dazu konfiguriert ist, den Netzspannungsabfall in dem ersten Zeitraum auf folgende Weise zu erlangen:

$$Vdelta2 = R * It2,$$

wobei
Vdelta2 den Netzspannungsabfall in dem ersten Zeitraum darstellt, R die Leitungsimpedanz darstellt, It2 den Ausgangsstrom der Buck-Boost-Einheit in dem ersten Zeitraum darstellt und * eine Teilungsoperation darstellt.

**9.** Batteriemodul nach einem der Ansprüche 1 oder 8, wobei die Erkennungs- und Steuereinheit dazu konfiguriert ist, die vierte Zielausgangsspannung auf folgende Weise zu erlangen:

$$Voutref4 = Vinref + Vdelta2,$$

wobei
Voutref4 die vierte Zielausgangsspannung darstellt, Vinref die von dem Endgerät benötigte Spannung darstellt und Vdelta2 den Leitungsspannungsabfall in dem ersten Zeitraum darstellt.


### Revendications

**1.** Module de batterie, dans lequel le module de batterie est configuré pour se décharger sur un dispositif terminal, et le module de batterie comprend une unité de détection et de commande, une unité abaisseur-élévateur et un bloc de cellules ;
l'unité de détection et de commande est configurée pour :

recevoir une tension requise par le terminal envoyée par le dispositif terminal ; et commander l'unité abaisseur-élévateur pour qu'elle se décharge sur le dispositif terminal à travers le bloc de cellules sur la base de la tension requise par le terminal ;
**caractérisé en ce que** l'unité de commande est en outre configurée pour :

recevoir une tension d'entrée de charge qui provient du dispositif terminal dans une première période et qui est envoyée par le dispositif terminal, où la tension d'entrée de charge dans la première période est une tension de port de charge détectée par le dispositif terminal dans la première période ; obtenir une chute de tension de ligne dans la deuxième période sur la base de la tension d'entrée de charge du dispositif terminal dans la première période et de la tension de sortie de l'unité abaisseur-élévateur dans la deuxième période ; et après avoir obtenu la chute de tension de ligne dans la deuxième période, obtenir une impédance de ligne sur la base du courant de sortie de l'unité abaisseur-élévateur dans la deuxième période et de la chute de tension de ligne dans la deuxième période ;
obtenir une chute de tension de ligne dans la première période sur la base de l'impédance de ligne et d'un courant de sortie de l'unité abaisseur-élévateur dans la première période ; obtenir une quatrième tension de sortie cible sur la base de la chute de tension de ligne dans la première période et de la tension requise par le terminal ; et
commander l'unité abaisseur-élévateur pour qu'elle se décharge sur le dispositif terminal sur la base de la quatrième tension de sortie cible à travers le bloc de cellules.

**2.** Module de batterie selon la revendication 1, dans lequel l'unité de détection et de commande est configurée pour :
obtenir une deuxième valeur de référence d'erreur sur la base de la tension requise par le terminal et une tension de sortie de l'unité abaisseur-élévateur dans une deuxième période, dans lequel la deuxième période est une période de commande de tension avant la première période ; obtenir une deuxième tension de sortie cible sur la base de la deuxième valeur de référence d'erreur et de la tension de sortie de l'unité abaisseur-élévateur dans la première période ; et commander l'unité abaisseur-élévateur pour qu'elle se décharge sur le dispositif terminal sur la base de la deuxième tension de sortie cible à travers le bloc de cellules.

3. Module de batterie selon la revendication 2, dans lequel l'unité de détection et de commande est configurée pour obtenir la deuxième valeur de référence d'erreur de la manière suivante :

$$Verror2 = Vinref - Voutref2,$$

dans lequel
Verror2 représente la deuxième valeur de référence d'erreur, Vinref représente la tension requise par le terminal et Voutref2 représente la tension de sortie de l'unité abaisseur-élévateur dans la deuxième période.

4. Module de batterie selon la revendication 2 ou 3, dans lequel l'unité de détection et de commande est configurée pour obtenir la deuxième tension de sortie cible de la manière suivante :

$$Voutref3 = Voutref0 + Verror2,$$

dans lequel
Voutref3 représente la deuxième tension de sortie cible, Voutref0 représente la tension de sortie de l'unité abaisseur-élévateur dans la première période et Verror2 représente la deuxième valeur de référence d'erreur.

5. Module de batterie selon l'une quelconque des revendications 1 à 4, dans lequel l'unité de détection et de commande est configurée pour : recevoir des informations de terminal envoyées par le dispositif terminal, dans lequel les informations de terminal indiquent la tension par le terminal ; et obtenir, sur la base des informations de terminal, la tension requise par le terminal.

6. Module de batterie selon la revendication 5, dans lequel l'unité de détection et de commande est configurée pour : lorsque les informations de terminal comprennent la tension requise par le terminal, obtenir la tension requise par le terminal à partir des informations de terminal ; ou lorsque les informations de terminal comprennent des informations d'indication de tension, obtenir les informations d'indication de tension à partir des informations de terminal, et obtenir la tension requise par le terminal sur la base d'une correspondance prédéfinie entre les informations d'indication de tension et la tension requise par le terminal.

7. Module de batterie selon la revendication 1, dans lequel l'unité de détection et de commande est configurée pour : lorsque la première tension de sortie cible satisfait une condition de compensation de tension prédéfinie, recevoir une troisième valeur de référence d'erreur envoyée par le dispositif terminal, dans lequel la troisième valeur de référence d'erreur est obtenue par le dispositif terminal sur la base de la tension requise par le terminal et d'une tension d'entrée de charge du dispositif terminal dans une troisième période, et la troisième période est une période de commande de tension après la première période ; obtenir une troisième tension de sortie cible sur la base de la troisième valeur de référence d'erreur et d'une tension de sortie de l'unité abaisseur-élévateur dans la troisième période ; et commander l'unité abaisseur-élévateur pour qu'elle se décharge sur le dispositif terminal sur la base de la troisième tension de sortie cible à travers le bloc de cellules.

8. Module de batterie selon la revendication 1, dans lequel l'unité de détection et de commande est configurée pour obtenir la chute de tension de ligne dans la première période de la manière suivante :

$$Vdelta2 = R * It2,$$

dans lequel
Vdelta2 représente la chute de tension de ligne dans la première période, R représente l'impédance de ligne, It2 représente le courant de sortie de l'unité abaisseur-élévateur dans la première période et * représente une opération de division.

9. Module de batterie selon l'une des revendications 1 et 8, dans lequel l'unité de détection et de commande est configurée pour obtenir la quatrième tension de sortie cible de la manière suivante :

$$Voutref4 = Vinref + Vdelta2,$$

dans lequel
Voutref4 représente la quatrième tension de sortie cible, Vinref représente la tension requise par le terminal et Vdelta2 représente la chute de tension de ligne dans la première période.

FIG. 1

FIG. 2

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020127482 A